# EUROPEAN PATENT SPECIFICATION

(11) **EP 2 155 820 B1**
(45) Date of publication and mention of the grant of the patent: **01.02.2017**
(21) Application number: 07799648.6
(22) Date of filing: 17.07.2007
(51) Int. Cl.: C08F 283/00, C08G 64/12, C08L 65/00, C08L 71/00, C08L 71/12, C08L 69/00

(54) **POLYARYL ETHER KETONE-POLYCARBONATE COPOLYMER BLENDS**
MISCHUNGEN VON POLYARYLETHERKETONE-POLYCARBONATE COPOLYMEREN
MÉLANGES DE POLYARYL-ÉTHER-CÉTONES ET DE COPOLYMÈRES DE POLYCARBONATE

(30) Priority: 04.05.2007 US 744354
(43) Date of publication of application: 24.02.2010
(73) Proprietor: SABIC Global Technologies B.V., 4612 PX Bergen op Zoom (NL)
(72) Inventor: GALLUCCI, Robert, Russell, Mount Vernon, IN 47620 (US)
(74) Representative: Modiano, Micaela Nadia
(86) International application number: PCT/US2007/073688
(87) International publication number: WO 2008/136840

(56) References cited:
- EP-A- 1 582 549
- WO-A-2006/012162
- US-A1- 2007 010 619

## Description

### Field of the Invention

This invention relates to blends of polyaryl ether ketones with isoindolinone copolycarbonates and articles made from them.

### Background of the Invention

Crystalline polyaryl ether ketones (PAEK) resins are known in the art. PAEK resins, including for example polyaryl ketones, polyether ketones and polyether ether ketones, have very desirable properties, such as solvent resistance, flame resistance, low wear rate, abrasion resistance, and high strength.

However the relatively low glass transition temperatures (Tg) of these crystalline PAEK resins limits their use at high temperatures under load. This deficiency has been improved, but not solved, by the addition of glass fiber, carbon fibers and other reinforcements as well as mineral fillers. Unfortunately, these changes, while improving one property, adversely affect other properties. For example, addition of fibers increases weight, reduces flow and induces anisotropy in molded parts. Such anisotropy in a part may, for example, result in warp or other undesirable dimensional changes, such as curling in a film. In some instances the fiber additives can interfere with the surface smoothness of the shaped parts, causing uneven surface properties. This is especially true in thin parts and films. Addition of a reinforcing filler to PAEK resins will also make it difficult to extrude thin films and fibers.

Thus there exists a need for crystalline polyaryl ether ketone (PAEK) formulations with a range of improved properties, for instance load bearing capabilities at high temperature, and improved impact, while still having good melt processability allowing for their improved use in molded articles, sheets, films and fibers.

US2007010619 (A1) discloses a polymer, article and blend including a polymer low yellowness index comprising structural units derived from a 2-hydrocarbyl-3,3-bis(4-hydroxyaryl)phthalimidine.

EP 1582549 (A1) discloses a polymer blend consisting essentially of at least one thermoplastic polymer, and a polymer comprising structural units derived from a 2-hydrocarbyl-3,3-bis(4-hydroxyaryl)phthalimidine, and

WO2006012162 discloses a method for producing a 2-hydrocarbyl-3,3-bis(4-hydroxyaryl)phthalimidine.

### Summary of the Invention

According to the invention, a polymer composition comprising a mixture of:
a) a first resin component comprising a polyaryl ether ketone, a polyaryl ketone, a polyether ketone, a polyether ether ketone, or a combination of two or more of the foregoing, and
b) a second resin component comprising a copolycarbonate having repeating carbonate units of formula (VII) 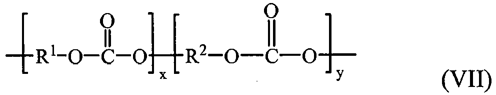
wherein R¹ is derived from a dihydroxy compound of formula (VIII): 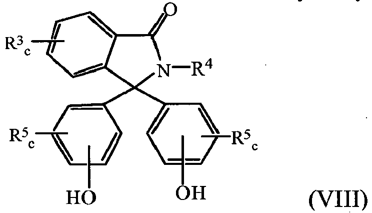 wherein R³ and R⁵ are each independently a halogen, a C₁₋₁₀ alkyl group, alkoxy or a C₆₋₂₀ aryl group, R⁴ is a C₁₋₆ alkyl, a C₆₋₂₀ aryl group, phenyl, or phenyl substituted with up to five halogens, sulfone, alkoxy, or C₁₋₁₀ alkyl groups, and c is 0 to 4; and R² is derived from a dihydroxy hydrocarbylene compound of formula (IX)

HO-R⁶-OH (IX)

wherein at least 60 mole% of the R⁶ groups are aromatic, and the dihydroxy compound of formula (IX) is not the same as the dihydroxy compound of formula (VIII), and wherein x+y=100%, and wherein the repeating carbonate units of formula (VII) comprise at least 10 mole% of formula (VIII),
wherein the mixture is a phase separated mixture having at least two glass transition temperatures, as measured by ASTM method D5418, wherein the first glass transition temperature is from 120 to 160°C and the second glass transition temperature is from 170 to 280°C, is provided.

In another embodiment, an article that comprises the polymer composition is provided.

### Brief Description of the Figures

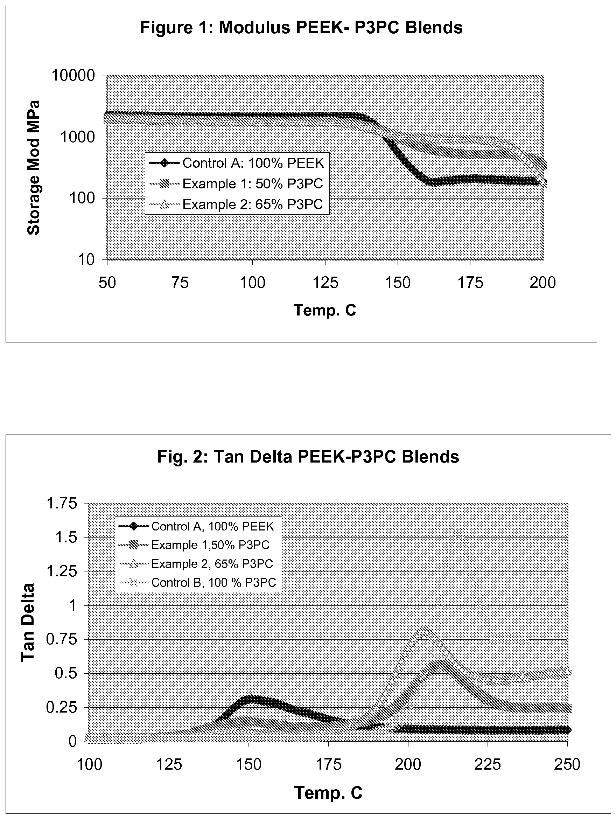

Figure 1 shows the modulus, measured in MegaPascals (MPa), as a function of temperature for an unblended PEEK resin (Control A), an immiscible 50:50 polyether ether ketone (PEEK):isoindolinone copolycarbonate blend (Example 1) and another immiscible 35:65 polyether ether ketone (PEEK):isoindolinone copolycarbonate blend (Example 2). The modulus was measured as per ASTM method D5418 using dynamic mechanical methods on a 3.2 mm molded bar.
Figure 2 shows the tan delta for the samples of Figure 1 (Control A and Examples 1 and 2). Two peaks in Examples 1 and 2 show the presence of two glass transition temperatures. The tan delta was measured as per ASTM method D5418 using dynamic mechanical methods on a 3.2 mm molded bar.

### Detailed Description of the Invention

In a first embodiment, a polymer composition comprising a mixture of:
a) a first resin component comprising a polyaryl ether ketone, a polyaryl ketone, a polyether ketone, a polyether ether ketone, or a combination of two or more of the foregoing, and
b) a second resin component comprising a copolycarbonate having repeating carbonate units of formula (VII) 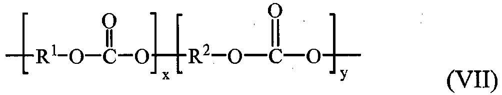
wherein R¹ is derived from a dihydroxy compound of formula (VIII): 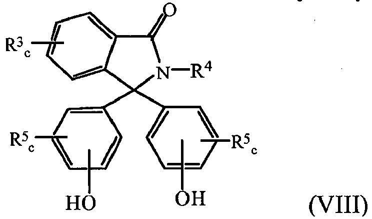 wherein R³ and R⁵ are each independently a halogen, a C₁₋₁₀ alkyl group, alkoxy or a C₆₋₂₀ aryl group, R⁴ is a C₁₋₆ alkyl, a C₆₋₂₀ aryl group, phenyl, or phenyl substituted with up to five halogens, sulfone, alkoxy, or C₁₋₁₀ alkyl groups, and c is 0 to 4; and R² is derived from a dihydroxy hydrocarbylene compound of formula (IX)

HO-R⁶-OH (IX)

wherein at least 60 mole% of the R⁶ groups are aromatic, and the dihydroxy compound of formula (IX) is not the same as the dihydroxy compound of formula (VIII), and wherein x+y=100%, and wherein the repeating carbonate units of formula (VII) comprise at least 10 mole% of formula (VIII),
wherein the mixture is a phase separated mixture having at least two glass transition temperatures, as measured by ASTM method D5418, wherein the first glass transition temperature is from 120 to 160°C and the second glass transition temperature is from 170 to 280°C is provided.

In an embodiment, a) is present in an amount of 75 to 30 wt% and b) is present in an amount of 25 to 70 wt%, based on 100 wt% of the composition. In some embodiments, the repeating carbonate units of formula (VII) comprise at least 30 mole% of the dihydroxy compound of formula (VIII). In other embodiments, the dihydroxy compound of formula (VIII) comprises a dihydroxy compound of formula (XV) 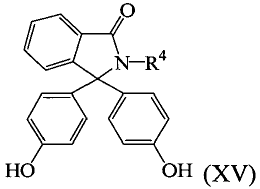 wherein R⁴ is a C₁₋₆ alkyl or phenyl group, or a dihydroxy compound of formula (XVI) or (XVII)

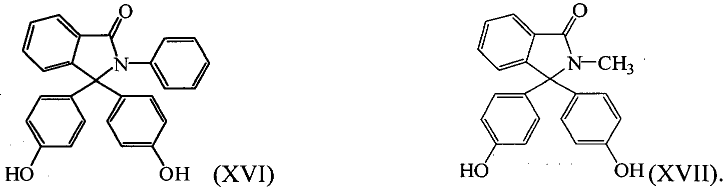

In some compositions, the composition has a heat distortion temperature (HDT) of greater than or equal to 160°C, measured as per ASTM method D648 at 66 psi (0.46 MPa) on a 3.2 mm sample, or a the composition has a modulus of at least 300 MPa at 170°C, as measured by ASTM D5418 on a 3.2 mm sample. In other compositions, the composition comprises less than 1 wt% of a fibrous reinforcement selected from the group consisting of glass fibers, carbon fibers, metal fibers, and ceramic fibers and combinations of two or more of the foregoing, or the copolycarbonate has less than or equal to 1000 ppm of benzylic protons, or the copolycarbonate has less than or equal to 1 mole% urethane groups.

In some embodiments, the composition has a crystalline melting point from 300 to 380°C as measured by ASTM method D3418, or the second resin has a glass transition temperature (Tg) of 180 to 280°C, as measured by ASTM method D3418, or wherein the crystallization temperature, as measured from a molten polymer mixture cooled at a rate of 20 °C/min., is greater than or equal to 250°C. In some embodiments, the composition has a reversed notched Izod impact strength greater than or equal to 1500 J/m, measured as per ASTM method D256 on a 3.2 mm sample.

In some embodiments, an article comprises the polymer composition. In some embodiments, the article is a sheet, a film, a multilayer sheet, a multilayer film, a molded part, an extruded profile, a fiber, a coated part or a foam.

In another embodiment, a polymer composition comprises a mixture of a) from 75 to 30 wt% of a first resin component comprising a polyaryl ether ketone, a polyaryl ketone, a polyether ketone, a polyether ether ketone, or a combination of two or more of the foregoing, and from 25 to 70 wt% of a second resin component comprising a copolycarbonate having repeating carbonate units of formula (VII) 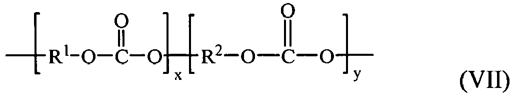 wherein R¹ is derived from a dihydroxy compound of formula (XV) 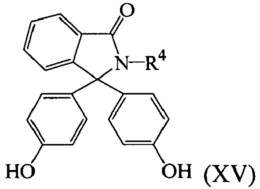 wherein R⁴ is C₁₋₆ alkyl or phenyl group; and R² is derived from a dihydroxy hydrocarbylene compound of formula (IX)

HO-R⁶-OH (IX)

wherein at least 60 mole% of the R⁶ groups are aromatic, and the dihydroxy compound of formula (IX) is not the same as the dihydroxy compound of formula (XV), wherein x+y=100%, and wherein the repeating carbonate units of formula (VII) comprise at least 10 mole% of formula (XV), wherein the mixture is a phase separated mixture having at least two glass transition temperatures, as measured by ASTM method D5418, wherein the first glass transition temperature is from 120 to 160°C and the second glass transition temperature is from 170 to 280°C.

In another embodiment, the polymer composition comprises a mixture of from 75 to 30 wt% of the first resin component and from 25 to 70 wt% of the second resin component
wherein R¹ is derived from a dihydroxy compound of formula (XV): 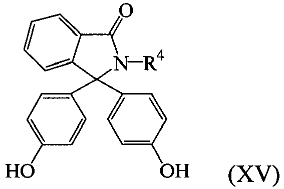 wherein R⁴ is a C₁₋₆ alkyl, a C₆₋₂₀ aryl group, phenyl, or phenyl substituted with up to five halogens, sulfone, alkoxy, or C₁₋₁₀ alkyl groups,
and wherein the repeating carbonate units of formula (VII) comprise at least 10 mole% of formula (XV).

The polymer compositions comprise phase separated blends of a first resin and a second resin. Such blends have improved load bearing capability at high temperature. In some embodiments, a high crystallization temperature is achieved in the blend. In such blends the presence of two separate polymeric phases is important to the improvement in properties. In still other instances the blends have improved practical impact strength as measured by reversed notched Izod impact.

In this specification and in the claims that follow, reference will be made to a number of terms that shall be defined to have the following meaning. The singular forms "a", "an" and "the" include plural referents unless the context clearly dictates otherwise. "Optional" or "optionally" mean that the subsequently described event or circumstance may or may not occur, and that the description includes instances where the event or circumstance occurs and instances where it does not.

As used herein, phase separated means that the first and second resins (for example, the PAEK and the copolycarbonate resins) exist in admixture as separate chemical entities that can be distinguished using standard analytical techniques, for example such as microscopy, differential scanning calorimetry or dynamic mechanical analysis, to show a least two distinct polymeric phases, one of which comprises the first resin (PAEK resin) and one of which comprises the second resin (the copolycarbonate resin). In some embodiments, the phases will contain a minor amount of the other resin dissolved therein, which may be up to 20 wt% of the phase. In other embodiments, the blends will form separate distinct domains (phases) from about 0.1 to 50 microns in size, optionally from about 0.1 to 20 microns. The blends may be completely immiscible or may show partial miscibility, but they must behave such that, at least in the solid state, the blend shows two or more distinct polymeric phases.

The ratio of first resin to second resin can be any ratio that results in a blend that has improved properties depending on the end use application, compared to the properties of either component alone. The ratio, in parts by weight, may range anywhere from 1:99 to 99:1, depending on the end use application, and the desired property to be improved, specifically from 15:85 to 85:15, or more specifically from 25:75 to 75:25. In other embodiments, depending on the application, the ratio may be also be from 40:60 to 60:40. The skilled artisan will appreciate that changing the ratios of the first resin component to the second resin component can fall to any real number ratio within the recited ranges depending on the desired result.

The properties of the final composition, which can be adjusted by changing the ratios of ingredients, include heat distortion temperature and load bearing capability. For example, in one embodiment the copolycarbonate resin is present in an amount effective to change, such as to improve by increasing, the load bearing capability of the mixture compared to the load bearing capability of the PAEK resin alone. In some embodiments, the first resin is present from 75 to 30 wt% of the composition and the second resin is present in an amount of from 25 to 70 wt% of the composition.

In some embodiments, the composition has a heat distortion temperature (HDT) of greater than or equal to 160°C, measured using ASTM method D5418 on a 3.2 mm bar at 0.46 MPa (66 psi), optionally greater than or equal to 170°C.

In an embodiment, the load bearing capability of the compositions will be shown by a flexural modulus of greater than or equal to 300 MPa as measured by ASTM method D5418 at 170°C on a 3.2 mm bar.

The compositions have reduced weight compared to the compositions comprising only the first resin as shown, for example, by reduced specific gravity as measured by ASTM method D792. Reduced specific gravity is desirable in some compositions as it allows for lower weight parts and in many instances more cost effective resins.

Polymer blends according to the present invention may be made by mixing the first and second resins in a molten state. The second resin has at least 10 mole % of the dihydroxy compound of formula (VIII). The two resins may be mixed by any method known to the skilled artisan that will result in a blend according to the present invention. Such methods include, for example, extrusion, sintering, pressure forming and other methods known in the art.

As used herein, the term polyaryl ether ketones (PAEK) comprises several polymer types containing aromatic rings, usually phenyl rings, linked primarily by ketone and ether groups in different sequences. Examples of PAEK resins include, but are not limited to, polyether ketones (PEK), polyether ether ketones (PEEK), polyether ketone ether ketone ketones (PEKEKK) and polyether ketone ketones (PEKK) and copolymers containing such groups as well as blends thereof. The PAEK polymers may comprise monomer units containing an aromatic ring, usually a phenyl ring, a ketone group and an ether group in any sequence. Low levels, for example less than 10 mole %, of addition linking groups may be present as long as they do not fundamentally alter the properties of the PAEK resin. PEEK is commercially available from Victrex Ltd. as VICTREX PEEK. PEKEKK resin is commercially available from BASF Co. as ULTRAPEK. Polyether ether ketone resins are also available under the GATONE and KETASPIRE trade names from Solvay Co. and Solvay Advanced Polymers.

In some instances the first resin component is a polymer selected from the group consisting of at least one of polyaryl ether ketones, polyaryl ketones, polyether ketones and polyether ether ketones. Any of the PAEK polymers can be used which will have improved properties through blending with a second resin component according to the present invention. This encompasses the use of one or more polymers from any of the several classes of PAEK resins described herein or described in the references cited herein.

For example, several polyaryl ether ketones which are highly crystalline, with melting points above 300°C, can be used in blends according to the present invention. Examples of these crystalline polyaryl ether ketones are shown in the structures (I), (II), (III), (IV) and (V) below.

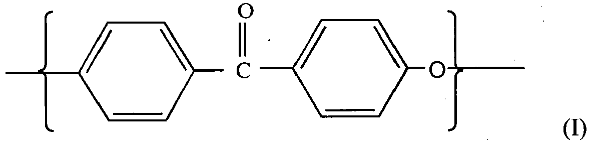

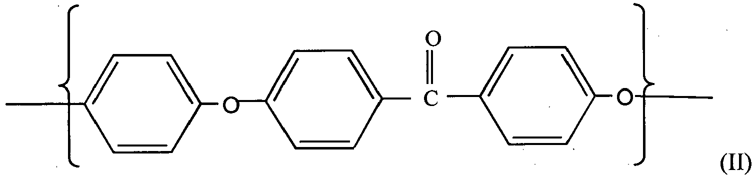

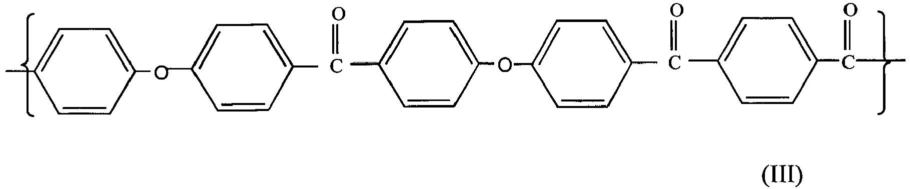

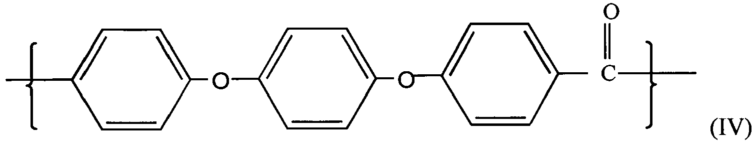

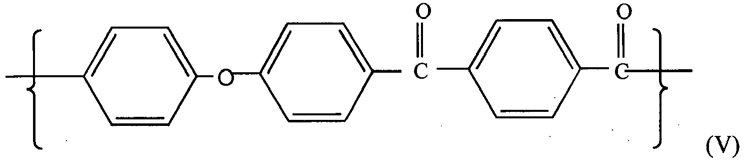

The formation and properties of polyaryl ether ketones is well known in the art. For example, the electrophilic aromatic substitution (e.g., Friedel-Crafts catalyzed) reaction of aromatic diacyl halides with unsubstituted aromatic compounds such as diphenyl ether some of the early work is disclosed in, for example, US Patent 3,065,205. A broad range of resins can be formed, for example, by the nucleophilic aromatic substitution reaction of an activated aromatic dihalide and an aromatic diol or salt thereof, as shown, for example, in US Patent 4,175,175.

Other examples of crystalline polyaryl ether ketones which are suitable for use herein can be generically characterized as containing repeating units of the following formula (VI): 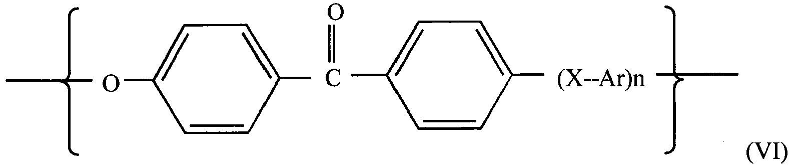 wherein Ar is independently a divalent aromatic radical selected from phenylene, biphenylene or naphthylene, X is independently -O-, -C(O)-, -O-Ar-C(O)-, -S-, -SO₂- or a direct bond, and n is an integer of from 0 to about 10.

PAEK resins can be prepared by methods well known in the art. One such method comprises heating a substantially equimolar mixture of at least one bisphenol, often reacted as its bis-phenolate salt, and at least one of either a dihalobenzoid compound or, in other cases, at least one halophenol compound may be reacted to form polymer. In other instances mixtures of these compounds may be used. For example hydroquinone can be reacted with a dihalo aryl ketone, such a dichloro benzophenone of difluoro benzophenone to form a polyaryl ether ketone. In other cases dihydroxy aryl ketone, such as dihydroxy benzophenone can be polymerized with aryl dihalides such as dichloro benzene to form PAEK resins. In still other instances dihydroxy aryl ethers, such as dihydroxy diphenyl ether can be reacted with dihalo aryl ketones, such as difluoro benzophenone. In other variations dihydroxy compounds with no ether linkages, such as or dihydroxy biphenyl or hydroquinone may be reacted with dihalo compounds which may have both ether and ketone linkages, for instance bis-(dichloro phenyl) benzophenone. In other instances diaryl ether carboxylic acids or carboxylic acid halides can be polymerized to form polyaryl ether ketones. Examples of such compounds are diphenylether carboxylic acid, diphenyl ether carboxylic acid chloride, phenoxy-phenoxy benzoic acid, and mixtures thereof. In still other instances dicarboxylic acids or dicarboxylic acid halides can be condensed with diaryl ethers, for example iso- or terephthaloyl chlorides (or mixtures thereof) can be reacted with diphenyl ether, to form PAEK resins.

Polyaryl ether ketones may be produced by various processes, including for example, the process as described in, for example, US Patent 4,176,222. This process comprises heating in the temperature range of 100 to 400°C, a substantially equimolar mixture of: (a) at least one bisphenol; and, (b.i) at least one dihalobenzenoid compound, and/or (b.ii) at least one halophenol, in which in the dihalobenzenoid compound or halophenol, the halogen atoms are activated by -C=O- groups ortho or para thereto, with a mixture of sodium carbonate or bicarbonate and a second alkali metal carbonate or bicarbonate, the alkali metal of said second alkali metal carbonate or bicarbonate having a higher atomic number than that of sodium, the amount of the second alkali metal carbonate or bicarbonate being such that there are 0.001 to 0.2 gram atoms of the alkali metal of higher atomic number per gram atom of sodium, the total amount of alkali metal carbonate or bicarbonate being such that there is at least one alkali metal atom for each phenol group present, and thereafter separating the polymer from the alkali metal halide.

Polyaryl ether ketones may also be prepared by other processes. One example is a process in which reactants such as: (a) a dicarboxylic acid; (b) at least one divalent aromatic radical and at least one mono aromatic dicarboxylic acid and, (c) combinations of (a) and (b), are reacted in the presence of a fluoroalkane sulfonic acid, particularly trifluoromethane sulfonic acid. See, for example, US Patent 4,396,755. Additional polyaryl ether ketones may be prepared according to a process wherein aromatic diacyl compounds are polymerized with at least one aromatic compound and at least one mono acyl halide as described in, for example, US Patent 4,398,020.

The polyaryl ether ketones may have a reduced viscosity of about 0.4 to about 5.0 dl/g, as measured in concentrated sulfuric acid at 25°C. PAEK resin weight average molecular weight (Mw) may vary from 5,000 to 150,000 g/mole, specifically from about 10,000 to 80,000 g/mole.

As used herein, the term "isoindolinone copolycarbonate" means polymers comprising repeating structural carbonate units of formula (VII): 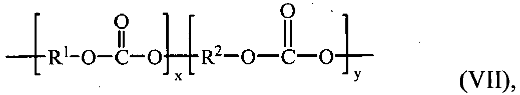 wherein R¹ is derived from a dihydroxy compound of formula (VIII):

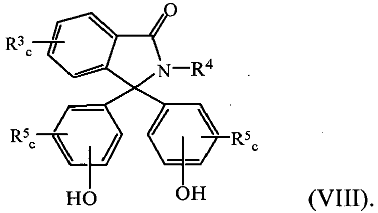

In formula (VIII), R³ and R⁵ are each independently a halogen, a C₁₋₁₀ alkyl group, alkoxy or a C₆₋₂₀ aryl group, R⁴ is a C₁₋₆ alkyl, a C₆₋₂₀ aryl group, phenyl, or phenyl substituted with up to five halogens, sulfone, alkoxy, or C₁₋₁₀ alkyl groups, and c is 0 to 4.

Further in formula (VII), R² is derived from a dihydroxy hydrocarbylene compound of formula (IX)

HO-R⁶-OH (IX)

wherein at least 60 mole % of the R⁶ groups are aromatic, and the dihydroxy compound of formula (IX) is not the same as the dihydroxy compound of formula (VIII). The dihydroxy hydrocarbylene of formula (IX) contains two hydroxyl groups attached to a divalent C₁₋₃₆ hydrocarbon group, that is, a group containing carbon, hydrogen, and optionally one or more other heteroatoms such as oxygen, nitrogen, sulfur, or a halide. Exemplary hydrocarbyl groups include substituted and unsubstituted C₁₋₃₆ alkylene groups, substituted and unsubstituted C₃₋₃₆ cycloalkylene groups, and substituted and unsubstituted C₆₋₃₆ arylene groups, provided that at least 60 mole % of the groups are aromatic. In formula (IX), there can be more than one dihydroxy hydrocarbylene compounds, depending on what R⁶ is and whether or not all of the groups are aromatic or not.

For example, R⁶ can have the structure of formula (X)

-A¹-Y¹-A²- (X)

wherein each of A¹ and A² is independently a monocyclic divalent aryl radical, and Y¹ is -O-, -S-, -S(O)-, -S(O₂)-, -C(O)-, or a divalent, substituted or unsubstituted C₁₋₃₀ hydrocarbon. The carbonate units containing the residues of formula (X) can be produced by the reaction of dihydroxy compounds of formula (XI)

HO-A¹-Y¹-A²-OH (XI)

wherein Y¹, A¹ and A² are as described above. Included are bisphenol compounds of general formula (XII): 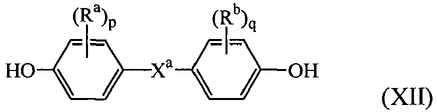 wherein R^{a} and R^{b} are each independently a halogen atom or a monovalent C₁₋₆ alkyl group; p and q are each independently integers of 0 to 4; and X^{a} is a hydrocarbylene wherein one to four carbon atom separate the two phenyl rings. In one embodiment, X^{a} represents one of the following groups: 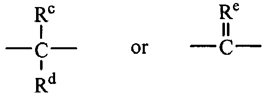 wherein R^{c} and R^{d} are each independently a hydrogen atom or a C₁₋₂₉ alkyl group, or R^{c}, C, and R^{d} taken together are a divalent C₃₋₁₀ cycloalkyl group that is optionally substituted with one or more C₁₋₁₀ alkyl groups, and R^{e} is a divalent hydrocarbon group. Exemplary X^{a} groups are methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. A specific class of alkyl-substituted cyclohexylidenes can be derived from bisphenols of formula (XIII) 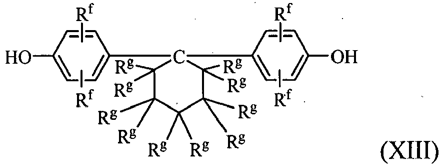 wherein each R^{f} is independently hydrogen, C₁₋₁₂ alkyl, or halogen; and each R^{g} is independently hydrogen or C₁₋₁₂ alkyl. Such cyclohexane-containing bisphenols, for example the reaction product of two moles of a phenol with one mole of a hydrogenated isophorone, are useful for making copolycarbonate polymers with high glass transition temperatures and high heat distortion temperatures.

Additional illustrative, non-limiting examples of suitable bisphenols include the following: bis(4-hydroxyphenyl)methane, bis(4-hydroxyphenyl)diphenylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiiridane bisphenol"), and the like, as well as combinations comprising at least one of the foregoing dihydroxy compounds.

Specific examples of bisphenol compounds that can be represented by formula (XI) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, and 1,1-bis(4-hydroxy-3-methylphenyl)cyclohexane (DMBPC). Combinations comprising at least one of the foregoing dihydroxy compounds can also be used.

In the alternative, or in addition, R² can be derived from arylene-containing compounds such as 4,4'-dihydroxybiphenyl, 1,6-dihydroxynaphthalene, 2,6-dihydroxynaphthalene, or an aromatic dihydroxy compound of formula (XIV) 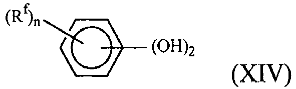 wherein each R^{f} is independently a halogen atom, a C₁₋₁₀ hydrocarbon group, or a C₁₋₁₀ halogen substituted hydrocarbon group, and n is 0 to 4. The halogen is usually bromine. Examples of such compounds include resorcinol, substituted resorcinol compounds such as 4-bromoresorcinol, 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, and the like, and catechol. Small amounts of carbonate units derived from hydroquinone or substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, and 2,3,5,6-tetrabromo hydroquinone can also be used.

In some instances isoindolinone copolycarbonates will contain carbonate linkages derived from at least one of bis-(hydroxy aryl)-N-aryl isoindolinones, bis-(hydroxy aryl)-N-alkyl isoindolinones, bis-(hydroxyl phenyl)-N-phenyl isoindolinones, 3,3-bis-(hydroxyl phenyl)-N-aryl isoindolin-1-ones, 3,3-bis-(hydroxyl phenyl)-N-phenyl isoindolin-1-ones and 3,3-bis-(4-hydroxyl phenyl)-N-phenyl isoindolin-1-one. In specific embodiments of formula (VIII), different dihydroxy compounds may be used. For example, in an embodiment, when R⁴ is C₆₋₂₀ aryl group, phenyl, or phenyl substituted with up to five halogens, sulfone, alkoxy, and each c is 0, the dihydroxy compound is a 3,3-bis-(4,4-hydroxyl phenyl)-N-aryl-isoindolinone. In another embodiment, when R⁴ is C₁₋₆ alkyl group, and each c is 0, the dihydroxy compound is a 3,3-bis-(hydroxyl phenyl)-N-alkyl-isoindolinone. These are shown in formula (XV)

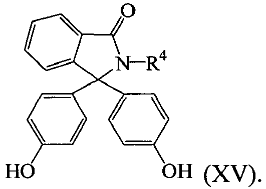

In more specific embodiments of formula (XV), R⁴ is a C₁₋₆ alkyl or phenyl group, specifically R⁴ is a methyl or phenyl group. In a specific embodiment, when R⁴ is phenyl and each c is 0, the dihydroxy compound is a 3,3-bis-(4,4-hydroxyl phenyl)-N-phenyl-isoindolinone and has formula (XVI) below. In another specific embodiment, when R⁴ is phenyl and each c is 0, the dihydroxy compound is a 3,3-bis-(hydroxyl phenyl)-N-methyl-isoindolinone and has formula (XVII) below.

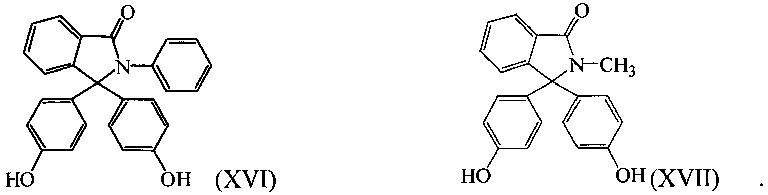

In some embodiments, the isoindolinone copolycarbonates may have a Tg of 170°C or greater, specifically 180°C or greater, more specifically 200°C or greater, and still more specifically 220°C or greater. Isoindolinone copolycarbonates of formula (VII) can have a Tg as high as 280°C.

The ratio of x:y in formula (VII) is adjusted in order to obtain the desired physical properties, in particular Tg, molecular weight, low haze, high transmittance, melt processability, and the like. The subscripts x and y represent the percentage of the respective units in the polymer chain with x+y = 100%. In order to obtain high Tg copolycarbonates, the ratio of x:y in formula (VII) can be 25:75 to 90:10. Outside of these ranges, particularly at lower ratios, it can be difficult to achieve high molecular weight (e.g., a weight average molecular weight of greater than about 10,000, more specifically greater than about 20,000) and/or high Tg (e.g., a single Tg of 160°C or higher, optionally 180°C or higher). In one embodiment, the copolycarbonates can be obtained when the molar ratio of x:y in formula (VII) is 40:60 to 90:10, specifically 45:55 to 85:15. The isoindolinone copolycarbonates can have a weight average molecular weight (Mw) of 10,000 to 200,000, specifically 20,000 to 100,000 as measured by gel permeation chromatography (GPC), using a crosslinked styrene-divinylbenzene column and calibrated to polycarbonate references. GPC samples are prepared using methylene chloride as the solvent at a sample concentration of 1 mg/ml, and are eluted at a flow rate of 1.5 ml/min using methylene chloride as the eluent. GPC analysis can be done as described in ASTM method D5296.

In an embodiment, the isoindolinone copolycarbonates have flow properties suitable for the manufacture of thin articles. Melt volume flow rate (often abbreviated MVR) measures the rate of extrusion of a thermoplastics through an orifice at a prescribed temperature and load. Isoindolinone copolycarbonates suitable for the formation of thin articles can have an MVR, measured at 330°C/2.16 kg according to ASTM D1238, of 0.5 to 80 cubic centimeters per 10 minutes (cc/10 min). In a specific embodiment, a suitable isoindolinone copolycarbonate composition has an MVR measured at 330 °C/2.16 kg according to ASTM D1238, of 0.5 to 50 cc/10 min, specifically 0.5 to 45 cc/10 min, and more specifically 1 to 40 cc/10 min. Mixtures of isoindolinone copolycarbonates of different flow properties can be used to achieve the overall desired flow property. The isoindolinone copolycarbonates can also be mixed with other polycarbonates that do not have isoindolinone functionality.

The isoindolinone copolycarbonates of formula (VII) can be melt-blended with a non-isoindolinone containing polycarbonate comprising units of formula (XVIII): 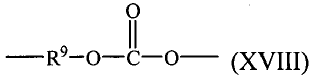 wherein the R⁹ groups are derived from compounds of formula (XVIII) as described above, with the proviso that the dihydroxy compound of formula (XVIII) is not the same as the dihydroxy compound of formula (VII). Specific examples of R⁹ groups for use in the non-isoindolinone polycarbonate include the particular bisphenol compounds of formula (VII). Specific examples of bisphenol compounds that can be represented by formula (VII) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, and 1,1-bis(4-hydroxy-t-butylphenyl) propane. Combinations comprising at least one of the foregoing dihydroxy compounds can also be used.

In one specific embodiment, the non-isoindolinone polycarbonate is a linear homopolymer derived from bisphenol A, which each of A¹ and A² is p-phenylene and Y¹ is isopropylidene in formula (XVIII). The non-isoindolinone polycarbonates can have a weight average molecular weight of 10,000 to 200,000, specifically 20,000 to 100,000 as measured by gel permeation chromatography (GPC), using a crosslinked styrene-divinylbenzene column and calibrated to polycarbonate references.

The non-isoindolinone containing polycarbonates can be homopolycarbonates, copolymers comprising different R⁹ moieties, or copolymers comprising carbonate units and other types of polymer units, such as ester units. Combinations comprising any one or more of the foregoing can also be used, for example a combination comprising a homopolycarbonate and a polyester-polycarbonate. As used herein, a "combination" is inclusive of blends, mixtures, alloys, reaction products, and the like. A specific type of copolymer is a polyester-polycarbonate, also known as a polyester-carbonate or a polycarbonate-polyester. Such copolymers further contain, in addition to recurring carbonate chain units of the formula (XVIII), repeating units of formula (XIX): 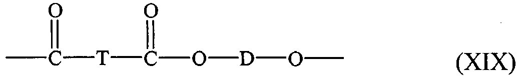 wherein D is a divalent group derived from a dihydroxy compound, and can be, for example, a C₂₋₁₀ alkylene group, a C₆₋₂₀ alicyclic group, a C₆₋₂₀ aromatic group or a polyoxyalkylene group in which the alkylene groups contain 2 to 6 carbon atoms, specifically 2, 3, or 4 carbon atoms; and T divalent group derived from a dicarboxylic acid, and can be, for example, a C₂₋₁₀ alkylene group, a C₆₋₂₀ alicyclic group, a C₆₋₂₀ alkyl aromatic group, or a C₆₋₂₀ aromatic group. In one embodiment, D is a C₂₋₃₀ alkylene group having a straight chain, branched chain, or cyclic (including polycyclic) structure. In another embodiment, D is derived from an aromatic dihydroxy compound of formula (XI), specifically formula (XII) above. In another embodiment, D is derived from an aromatic dihydroxy compound of formula (XIX) above.

Examples of aromatic dicarboxylic acids that can be used to prepare the ester units of non-isoindolinone containing polyester-polycarbonates include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid comprises a combination of isophthalic acid and terephthalic acid wherein the weight ratio of isophthalic acid to terephthalic acid is 91:9 to 2:98. The molar ratio of ester units to carbonate units in the copolymers can vary broadly, for example 1:99 to 99:1, specifically 10:90 to 90:10, more specifically 25:75 to 75:25, depending on the desired properties of the final composition.

In a specific embodiment, the ester unit of a non-isoindolinone containing polyester-polycarbonate is derived from the reaction of a combination of isophthalic and terephthalic diacids (or derivatives thereof) with resorcinol. In another specific embodiment, the polyester unit of a polyester-polycarbonate is derived from the reaction of a combination of isophthalic acid and terephthalic acid with bisphenol A. In a specific embodiment, the polycarbonate units are derived from bisphenol A. In another specific embodiment, the polycarbonate units are derived from resorcinol and bisphenol A in a molar ratio of resorcinol carbonate units to bisphenol A carbonate units of 1:99 to 99:1.

Processes such as interfacial polymerization and melt polymerization can be used to manufacture isoindolinone and non-isoindolinone polycarbonates. Isoindolinone copolycarbonates are generally manufactured using interfacial polymerization. Although the reaction conditions for interfacial polymerization can vary, an exemplary process generally involves dissolving or dispersing a dihydric phenol reactant in aqueous caustic soda or similar base, adding the resulting mixture to a water-immiscible solvent medium, and contacting the reactants with a carbonate precursor in the presence of a catalyst such as, for example, triethylamine or a phase transfer catalyst, under controlled pH conditions, e.g., 8 to 10. The most commonly used water immiscible solvents include methylene chloride, 1,2-dichloroethane, chlorobenzene, toluene, and the like.

Exemplary carbonate precursors include, for example, a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors can also be used. In an exemplary embodiment, an interfacial polymerization reaction to form carbonate linkages uses phosgene as a carbonate precursor, and is referred to as a phosgenation reaction.

Among the phase transfer catalysts that can be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Exemplary phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br, a C₁₋₈ alkoxy group or a C₆₋₁₈ aryloxy group. An effective amount of a phase transfer catalyst can be 0.1 to 10 wt% based on the weight of bisphenol in the phosgenation mixture. In another embodiment an effective amount of phase transfer catalyst can be 0.5 to 2 wt% based on the weight of bisphenol in the phosgenation mixture.

All types of polycarbonate end groups are contemplated as being useful in the isoindolinone and non-isoindolinone polycarbonates, provided that such end groups do not significantly adversely affect desired properties of the compositions.

Branched isoindolinone and non-isoindolinone polycarbonates can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane (THPE), isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt%. Mixtures comprising linear polycarbonates and branched polycarbonates can be used.

A chainstopper (also referred to as a capping agent) can be included during isoindolinone and non-isoindolinone polycarbonate polymerization. The chainstopper limits molecular weight growth rate, and so controls molecular weight in the polycarbonate. Exemplary chainstoppers include certain mono-phenolic compounds, mono-carboxylic acid chlorides, and/or mono-chloroformates. Mono-phenolic chainstoppers are exemplified by monocyclic phenols such as phenol and C₁-C₂₂ alkyl-substituted phenols such as p-cumyl-phenol, resorcinol monobenzoate, and p-and tertiary-butyl phenol; and monoethers of diphenols, such as p-methoxyphenol. Alkyl-substituted phenols with branched chain alkyl substituents having 8 to 9 carbon atom can be specifically mentioned. Certain mono-phenolic UV absorbers can also be used as a capping agent, for example 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like.

Mono-carboxylic acid chlorides can also be used as chainstoppers. These include monocyclic, mono-carboxylic acid chlorides such as benzoyl chloride, C₁-C₂₂ alkyl-substituted benzoyl chloride, toluoyl chloride, halogen-substituted benzoyl chloride, bromobenzoyl chloride, cinnamoyl chloride, and combinations thereof; polycyclic, mono-carboxylic acid chlorides such as trimellitic anhydride chloride, and naphthoyl chloride; and combinations of monocyclic and polycyclic mono-carboxylic acid chlorides. Chlorides of aliphatic monocarboxylic acids with less than or equal to 22 carbon atoms are useful. Functionalized chlorides of aliphatic monocarboxylic acids, such as acryloyl chloride and methacryoyl chloride, are also useful. Also useful are mono-chloroformates including monocyclic, mono-chloroformates, such as phenyl chloroformate, alkyl-substituted phenyl chloroformate, p-cumyl phenyl chloroformate, toluene chloroformate, and combinations thereof.

Alternatively, melt processes can be used to make the isoindolinone and non-isoindolinone polycarbonates. Generally, in the melt polymerization process, polycarbonates can be prepared by co-reacting, in a molten state, the dihydroxy reactant(s) and a diaryl carbonate ester, such as diphenyl carbonate, in the presence of a transesterification catalyst in a BANBURY^{®} mixer, twin screw extruder, or the like to form a uniform dispersion. Volatile monohydric phenol is removed from the molten reactants by distillation and the polymer is isolated as a molten residue. A specifically useful melt process for making polycarbonates uses a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing. In addition, useful transesterification catalysts for use can include phase transfer catalysts of formula (R³)₄Q⁺X above, wherein each R³, Q, and X are as defined above. Exemplary transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing.

In some instances, the isoindolinone copolycarbonate will be essentially free of urethane groups, meaning the isoindolinone copolycarbonate will have less than 1 mole % urethane groups. The absence of urethane groups will be important at the high processing temperatures of the PAEK blends as the urethane may decompose to give off unwanted and possibly hazardous isocyanate compounds during melt processing. The presence of urethane groups may be determined using standard analytical methods such as IR and NMR spectroscopy. In other instances, the isoindolinone copolycarbonate will be essentially free of benzylic protons, meaning the benzylic proton content will be less than 1000 ppm of the isoindolinone copolycarbonate copolymer content. Benzylic protons are not desirable for the high temperature melt processing needed for PAEK blends as they may react to build melt viscosity and make the isoindolinone copolycarbonate PAEK blends difficult to mold and extrude. The presence of benzylic protons may be determined using standard analytical methods such as NMR spectroscopy.

In some embodiments, especially where the formation of the film and fiber are desired, the composition should be essentially free of fibrous reinforcement such as glass fiber, carbon fiber, ceramic or metal fibers. Essentially free of fibrous reinforcement in this context means less than 5 wt% of fibrous reinforcement, based on the weight of the entire composition. In other embodiments, it is desirable to have less than 1 wt% fibrous reinforcement present. The presence of fibrous reinforcement can be determined using standard analytical means for example microscopy.

In other embodiments, it is very useful to have compositions that develop some degree of crystallinity on cooling. This may be more important in articles with high surface area such as fibers and films which will cool off quickly due to their high surface area and may not develop the full crystallinity necessary to get optimal properties. In some instances the formation of crystallinity is reflected in the crystallization temperature (Tc), which can be measured by a methods such as differential scanning calorimetry (DSC), for example, ASTM method D3418. The temperature of the maximum rate of crystallization may be measured as the Tc. In some instances, for example at a cooling rate of 80°C/min., it may be desirable have a Tc of greater than or equal to 250°C. In other instances, for example a slower cooling rate of 20°C/min., a crystallization temperature of greater than or equal to 280°C may be desired.

In some instances the composition of the invention will have at least two distinct glass transition temperatures (Tg), a first Tg from the first resin (PAEK resin), or a partially miscible blend, and a second Tg associated with the second (copolycarbonate) resin, or mixture. These glass transition temperatures (Tgs) can be measured by any conventional method such as DSC or dynamic mechanical analysis (DMA). In some embodiments, the first Tg can be from 120 to 160°C and the second Tg can be from 170 to 280°C. In other embodiments it may be useful to have a second Tg from 200 to 250°C. In some embodiments, depending of the specific resins, molecular weights and composition of the blend, the Tgs may be distinct or the transitions may partially overlap.

In another embodiment, the blends will have a melt viscosity that ranges from about 200 Pascal-seconds to about 10,000 Pascal-seconds (Pa-s) at 380°C as measured by ASTM method D3835 using a capillary rheometer with a shear rate of 100 to 10000 1/sec. Resin blends having a melt viscosity from about 200 Pa-s to about 10,000 Pa-s at 380°C will allow the composition to be more readily formed into articles using melt processing techniques. In other instances a lower melt viscosity of from 200 to 5,000 Pa-s will be useful. Suitable methods for measuring melt viscosity vs. time are, for example, ASTM method D4440.

The compositions of the invention can also be combined with various additives including, but not limited to, colorants such as titanium dioxide, zinc sulfide and carbon black, stabilizers such as hindered phenols, phosphorous containing stabilizers such as, phosphites, phosphonites, thioesters and mixtures thereof, as well as mold release agents, lubricants, metal deactivators, plasticizers, nucleating agents such as talc, wear resistant additives, such a fluoro polymers and metal sulfides, flame retardants, smoke suppressors and anti-drip agents, for example, those based on fluoro polymers. Use of phosphonate or phosphite compounds or mixtures thereof may be desired in some instances to improve color and stability. In another instance aryl phosphonate, phosphite compounds or mixtures thereof or in combination with hindered phenol antioxidants may be employed. Ultraviolet light stabilizers can also be added to the compositions in effective amounts. All the aforesaid additives are known in the art, as are their effective levels and methods of incorporation. Effective amounts of the additives vary widely, but they are usually present in an amount up to about 0.01 to 30% or more by weight, based on the weight of the entire composition and the type of additive used. Additives which are organic compounds with a molecular weight of greater than 500, or in other instances greater than 1000, may be desired to keep the additive from being volatilized from the polymer blends during high temperature melt processing needed to form an article or make the blend.

The compositions can be formed into articles by any number of methods. Suitable methods include, for example, injection molding, blow molding, compression molding, profile extrusion, sheet or film extrusion, sintering, gas assist molding, structural foam molding and thermoforming. Examples of such articles include, but are not limited to, cookware, food service items, medical devices, trays, plates, handles, helmets, animal cages, electrical connectors, enclosures for electrical equipment, engine parts, automotive engine parts, bearings, lighting sockets and reflectors, electric motor parts, power distribution equipment, communication equipment, computers and the like, including devices that have molded in snap fit connectors. The compositions can also be formed into fibers. In addition, the compositions can be used as coatings, for example powder coatings, or extruded into rods, slabs and other shapes that can be used to form articles by machining.

The compositions may also be converted to articles using known thermoplastic processes such as film and sheet extrusion. Film and sheet extrusion processes may include and are not limited to melt casting, blown film extrusion and calendaring. Films may range from 0.1 to 1000 microns in some instances. Co-extrusion and lamination processes may be employed to form composite multi-layer films or sheets. Single or multiple layers of coatings may further be applied to the single or multi-layer substrates to impart additional properties such as scratch resistance, ultra violet light resistance, aesthetic appeal, etc. Coatings may be applied through standard application techniques such as rolling, spraying, dipping, brushing, or flow coating. Film and sheet may alternatively be prepared by casting a solution or suspension of the composition in a suitable solvent onto a substrate, belt or roll followed by removal of the solvent. Films may also be metallized using standard processes such as sputtering, vacuum deposition and lamination with foil.

Oriented films may be prepared through blown film extrusion or by stretching cast or calendared films in the vicinity of the thermal deformation temperature using conventional stretching techniques. For instance, a radial stretching pantograph may be employed for multi-axial simultaneous stretching; an x-y direction stretching pantograph can be used to simultaneously or sequentially stretch in the planar x-y directions. Equipment with sequential uniaxial stretching sections can also be used to achieve uniaxial and biaxial stretching, such as a machine equipped with a section of differential speed rolls for stretching in the machine direction and a tenter frame section for stretching in the transverse direction.

Compositions may also be converted to multiwall sheets comprising a first sheet having a first side and a second side, wherein the first sheet comprises a thermoplastic polymer, and wherein the first side of the first sheet is disposed upon a first side of a plurality of ribs; and a second sheet having a first side and a second side, wherein the second sheet comprises a thermoplastic polymer, wherein the first side of the second sheet is disposed upon a second side of the plurality of ribs, and wherein the first side of the plurality of ribs is opposed to the second side of the plurality of ribs.

The films and sheets described above may further be thermoplastically processed into shaped articles via forming and molding processes including but not limited to thermoforming, vacuum forming, pressure forming, injection molding and compression molding. Multi-layered shaped articles may also be formed by injection molding a thermoplastic resin onto a single or multi-layer film or sheet substrate as described below:
1) Providing a single or multi-layer thermoplastic substrate having optionally one or more colors on the surface, for instance, using screen printing of a transfer dye.
2) Conforming the substrate to a mold configuration such as by forming and trimming a substrate into a three dimensional shape and fitting the substrate into a mold having a surface which matches the three dimensional shape of the substrate.
3) Injecting a thermoplastic resin into the mold cavity behind the substrate to (i) produce a one-piece permanently bonded three-dimensional product or (ii) transfer a pattern or aesthetic effect from a printed substrate to the injected resin and remove the printed substrate, thus imparting the aesthetic effect to the molded resin.

Those skilled in the art will also appreciate that common curing and surface modification processes including and not limited to heat-setting, texturing, embossing, corona treatment, flame treatment, plasma treatment and vacuum deposition may further be applied to the above articles to alter surface appearances and impart additional functionalities to the articles.

Without further elaboration, it is believed that one skilled in the art can, using the description herein, utilize the present invention. The following examples are included to provide addition guidance to those skilled in the art of practicing the claimed invention. The examples provided are merely representative of the work and contribute to the teaching of the present invention. Accordingly, these examples are not intended to limit the invention in any manner.

### Examples

Blends were prepared by extrusion in a 30 mm twin-screw extruder of mixtures of the polyaryl ether ketone (PAEK, specifically polyether ether ketone (PEEK), which was sold by Victrex Co, as VICTREX 450G), with an isoindolinone polycarbonate copolymer (P3PC) of 3,3'-bis-(4-hydroxy phenyl)-2-phenyl isoindolin-1-one, also known as N-phenyl bisphenolphthalein, and bisphenol A. The P3PC was a polycarbonate made from the reaction of about 51 mole % bisphenol A (BPA) with about 49 mole % N-phenyl phenolphthalein bisphenol and about an equal molar amount (∼100 mole %) of phosgene to form carbonate linkages, Mw ∼ 24,000, with a Tg of 215°C. Specifically, the P3PC used was a copolymer of formula (VII) wherein R¹ is derived from residues of the isoindolinone bisphenol of formula (XVI), and on average x is 49, R² is from BPA and y is on average 51. Compositions shown in table 1 are listed in wt% of the total blend. The extruder was set at about 380 to 405°C. The blends were run at about 200 rpm under vacuum using mild mixing screws. The extrudate was cooled, pelletized and dried at 150°C. Test samples were injection molded at a set temperature of 370 to 410°C and mold temperature of 120°C using a 30 second cycle time.

Physical properties were measured using ASTM test methods, as described below. All molded samples were conditioned for at least 48 hours at 50% relative humidity prior to testing. Reverse notched Izod impact values were measured at room temperature on 3.2 mm thick bars as per ASTM D256. Heat distortion temperature (HDT) was measured at 0.46 MPa (66 psi) on 3.2 mm thick bars as per ASTM D648. Tensile properties were measured on 3.2 mm type I bars as per ASTM method D638. Flexural properties were measured on 3.2 mm bars as per ASTM method D790. Differential scanning calorimetry (DSC) was run as per ASTM method D3418, but using different heating and cooling rates. Samples were heated at 20°C/min to 350°C and cooled at 20°C/min. to record peak crystallization temperature (Tc). Dynamic Mechanical Analysis (DMA) was run in flexure on 3.2 mm bars at a heating rate of 3°C/min. with an oscillatory frequency of at 1 Hertz. DMA tests were run from about 30 to about 200°C as per ASTM method D5418. Specific Gravity (Sp.G.) was measured on molded parts as per ASTM method D792.

Note that letters designate comparative control examples while numbers designate examples of the invention.

Control A, Example 1 and Example 2. Table 1 shows blends of a crystalline PEEK resin (the first resin) with an isoindolinone polycarbonate N-phenyl phenolphthalein copolymer (P3PC, the second resin). Control A shows the properties of the PEEK resin with no added ingredients. The control resin (PEEK resin) had a relatively low HDT of 66 psi and a relatively high specific gravity (Sp.G.). Example 1 demonstrates the addition of 50 wt% of a second resin (P3PC), which shows a 25°C increase in the heat distortion temperature (HDT), a reduction in specific gravity, and a large increase in toughness as shown by having no break (nb) in the reversed notched Izod test (RN Izod). Example 2, which had 65 wt% of the second resin (P3PC) blended with 35 wt5 of the first resin (PEEK), raised the HDT of the control by 41°C to 192°C. The RN Izod impact strength is surprisingly high compared to the PEEK control (control A). The injection molded parts were opaque and microscopy indicated Examples 1 and 2 were phase separated polymer blends. The blends had a tensile modulus of greater than 3000 MPa and a flexural modulus of above 2500 MPa.

Examples 1 and 2 also show crystalline behavior with a crystallization temperature (Tc) of 283°C and a crystalline melting point (Tm) of 338°C as determined by differential scanning calorimetry (DSC). Such crystalline behavior is indicative of good resistance to solvents. This is an improvement over the behavior of P3PC resin alone; which is known by one skilled in the art to be attacked by solvents, such as toluene and chloroform.

**Table 1**

| | Control A | Example 1 | Example 2 |
|---|---|---|---|
| VICTREX PEEK 450 G | 100 | 50 | 35 |
| P3PC | 0 | 50 | 65 |
| | | | |
| HDT 0.45 MPa °C | 151 | 176 | 192 |
| | | | |
| Sp. G. | 1.3290 | 1.2468 | 1.2394 |
| | | | |
| Ten. Mod. (MPa) | 4119 | 3255 | 3162 |
| Ten. Str. (Y) MPa | 89 | 85 | 84 |
| | | | |
| Flex Mod (MPa) | 3443 | 2901 | 2886 |
| Flex. Str. (MPa) | 135 | 129 | 130 |
| | | | |
| RN Izod (J/m) | 1047 | > 2130 (nb) | > 2130 (nb) |

Figure 1 shows the storage modulus of the PEEK (Control A) and the blends of the two resins (Examples 1 and 2) as a function of temperature from 50 to 200°C. The unmodified PEEK resin, Control A, shows a very large drop in modulus at the PEEK Tg at about 150°C. The modulus drops from about 2000 to about 190 MPa. Addition of P3PC to the PEEK to form a blend increases the modulus beyond that of the PEEK by itself (Control A). Examples of the invention, Examples 1 and 2, show an increase in modulus at temperatures beyond about 150°C to 200°C, compared to Control A.

Table 2 shows a comparison of the modulus for Control A, Example 1 and Example 2 at several temperatures. The control resin (PEEK) had a modulus ranging from 188 to 204 MPa at temperatures of from 160 to 200°C. The blends, Examples 1 and 2, had a much higher modulus, indicating increased load bearing capability at high temperature.

**Table 2**

| Temp. | Control A | Example 1 | Example 2 |
|---|---|---|---|
| | 100% PEEK | 50% P3PC | 65% P3PC |
| 150°C | 563 | 997 | 1069 |
| 160°C | 195 | 661 | 953 |
| 170°C | 200 | 537 | 932 |
| 180°C | 204 | 519 | 901 |
| 190°C | 195 | 511 | 657 |
| 200°C | 188 | 349 | 189 |

Figure 2 shows the tan delta values for the unblended resins (Controls A and B) and the resin blends (Examples 1 and 2). The peaks in the tan delta values indicate the glass transition temperatures (Tgs). As shown in Table 3, Examples 1 and 2 are phase separated showing two distinct Tgs. The Tg values for the control resins and the resin blends are shown in Table 3. The two distinct Tgs show that the blends are phase separated and retain the distinct nature each of the components rather than an averaging of properties that would be seen in miscible blends having a single Tg.

**Table 3**

| | | PEEK Tg °C | P3PC Tg °C |
|---|---|---|---|
| Control A | 100% PEEK | 151 | none |
| Example 1 | 50% P3PC | 149 | 210 |
| Example 2 | 65% P3PC | 143 | 205 |
| Control B | 100% P3PC | none | 215 |

While typical embodiments have been set forth for the purpose of illustration, the foregoing descriptions should not be deemed to be a limitation on the scope herein. Accordingly, various modifications, adaptations, and alternatives can occur to one skilled in the art without departing from the scope as defined in the appended claims.

## Claims

1. A polymer composition comprising a mixture of:
a) a first resin component comprising a polyaryl ether ketone, a polyaryl ketone, a polyether ketone, a polyether ether ketone, or a combination of two or more of the foregoing, and
b) a second resin component comprising a copolycarbonate having repeating carbonate units of formula (VII) 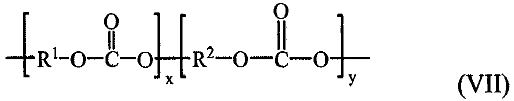
wherein R¹ is derived from a dihydroxy compound of formula (VIII): 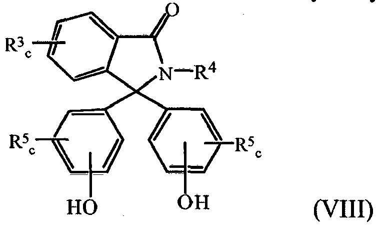 wherein R³ and R⁵ are each independently a halogen, a C₁₋₁₀ alkyl group, alkoxy or a C₆₋₂₀ aryl group, R⁴ is a C₁₋₆ alkyl, a C₆₋₂₀ aryl group, phenyl, or phenyl substituted with up to five halogens, sulfone, alkoxy, or C₁₋₁₀ alkyl groups, and c is 0 to 4; and R² is derived from a dihydroxy hydrocarbylene compound of formula (IX)
HO-R⁶-OH (IX)
wherein at least 60 mole% of the R⁶ groups are aromatic, and the dihydroxy compound of formula (IX) is not the same as the dihydroxy compound of formula (VIII), and wherein x+y=100%, and wherein the repeating carbonate units of formula (VII) comprise at least 10 mole% of formula (VIII),
wherein the mixture is a phase separated mixture having at least two glass transition temperatures, as measured by ASTM method D5418, wherein the first glass transition temperature is from 120 to 160°C and the second glass transition temperature is from 170 to 280°C.

2. The composition of claim 1, wherein the repeating carbonate units of formula (VII) comprise at least 30 mole% of the dihydroxy compound of formula (VIII).

3. The composition of claim 1, wherein the dihydroxy compound of formula (VIII) comprises a dihydroxy compound of formula (XV) 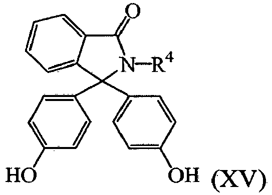 wherein R⁴ is a C₁₋₆ alkyl or phenyl group.

4. The composition of claim 1, wherein the dihydroxy compound of formula (VIII) comprises a dihydroxy compound of formula (XVI) or (XVII)

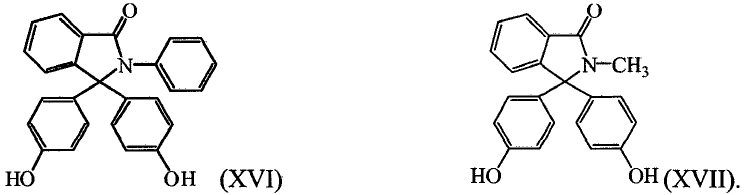

5. The composition of claim 1, wherein the composition has a heat distortion temperature (HDT) of greater than or equal to 160°C, measured as per ASTM method D648 at 66 psi (0.46 MPa) on a 3.2 mm sample.

6. The composition of claim 1, wherein a) is present in an amount of 75 to 30 wt% and b) is present in an amount of 25 to 70 wt%, based on 100 wt% of the composition.

7. The composition of claim 1, wherein the copolycarbonate has less than or equal to 1000 ppm of benzylic protons or the copolycarbonate has less than or equal to 1 mole% urethane groups.

8. The composition of claim 1, wherein the composition has a crystalline melting point from 300 to 380°C as measured by ASTM method D3418.

9. The polymer composition of claim 1, comprising from 75 to 30 wt% of the first resin component and from 25 to 70 wt% of the second resin component,
wherein R¹ is derived from a dihydroxy compound of formula (XV): 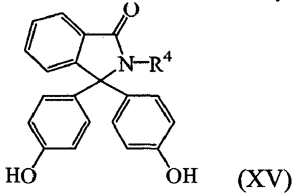 wherein R⁴ is a C₁₋₆ alkyl, a C₆₋₂₀ aryl group, phenyl, or phenyl substituted with up to five halogens, sulfone, alkoxy, or C₁₋₁₀ alkyl groups, and wherein the repeating carbonate units of formula (VII) comprise at least 10 mole% of formula (XV).

10. The composition of claim 9, wherein R⁴ is a C₁₋₆ alkyl or phenyl group.

11. The composition of claim 9, wherein the dihydroxy compound of formula (XV) comprises a dihydroxy compound of formula (XVI) or (XVII)

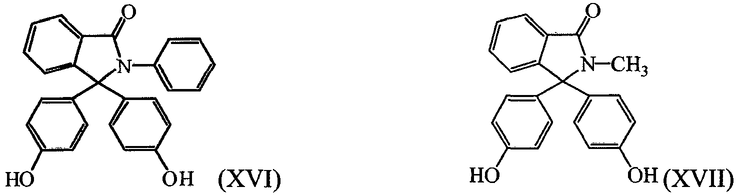

12. The composition of claim 1 or 9, wherein the second resin has a glass transition temperature (Tg) of 180 to 280°C, as measured by ASTM method D3418.

13. An article comprising the composition of claim 1 or 9.

14. The article of claim 13, wherein the article is a sheet, a film, a multilayer sheet, a multilayer film, a molded part, an extruded profile, a fiber, a coated part or a foam.

15. The polymer composition of claim 1 comprising a mixture of:
a) from 75 to 30 wt% of a first resin component comprising a polyaryl ether ketone, a polyaryl ketone, a polyether ketone, a polyether ether ketone, or a combination of two or more of the foregoing, and
b) from 25 to 70 wt% of a second resin component comprising a copolycarbonate having repeating carbonate units of formula (VII) 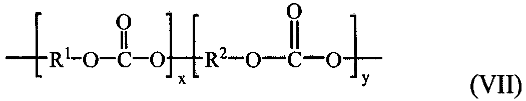
wherein R¹ is derived from a dihydroxy compound of formula (XV) 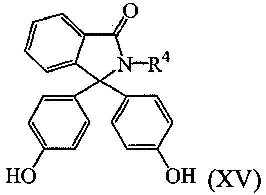 wherein R⁴ is C₁₋₆ alkyl or phenyl group; and R² is derived from a dihydroxy hydrocarbylene compound of formula (IX)
HO-R⁶-OH (IX)
wherein at least 60 mole% of the R⁶ groups are aromatic, and the dihydroxy compound of formula (IX) is not the same as the dihydroxy compound of formula (XV), wherein x+y=100%, and wherein the repeating carbonate units of formula (VII) comprise at least 10 mole% of formula (XV),
wherein the mixture has at least two glass transition temperatures, as measured by ASTM method D5418, wherein the first glass transition temperature is from 120 to 160°C and the second glass transition temperature is from 170 to 280°C.

## Patentansprüche

1. Eine Polymerzusammensetzung umfassend eine Mischung aus:
a) einer ersten Harzkomponente umfassend ein Polyaryletherketon, ein Polyarylketon, ein Polyetherketon, ein Polyetheretherketon, oder eine Kombination aus zwei oder mehr der zuvor genannten, und
b) einer zweiten Harzkomponente umfassend ein Copolycarbonat mit sich wiederholenden Carbonateinheiten der Formel (VII) 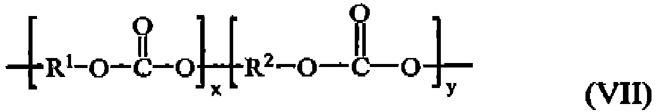
worin R¹ abgeleitet ist von einer Dihydroxyverbindung der Formel (VIII): 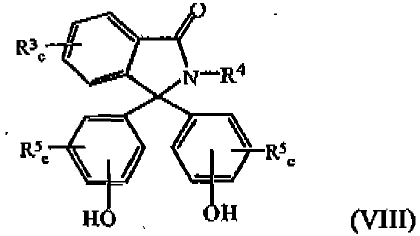 worin R³ und R⁵ jeweils unabhängig ein Halogen, eine C₁₋₁₀ Alkylgruppe, Alkoxy oder eine C₆₋₂₀ Arylgruppe sind, R⁴ ist ein C₁₋₆ Alkyl, eine C₆₋₂₀ Arylgruppe, Phenyl, oder Phenyl substituiert mit bis zu fünf Halogenen, Sulfon, Alkoxy, oder C₁₋₁₄ Alkylgruppen, und c ist 0 bis 4; und R² ist abgeleitet von einer Dihydroxyhydrocarbylenverbindung der Formel (IX)
HO-R⁶-OH (IX)
worin mindestens 60 Mol% der R⁶ Gruppen aromatisch sind, und die Dihydroxyverbindung der Formel (IX) ist nicht die gleiche wie die Dihydroxyverbindung der Formel (VIII), und worin x+y=100%, und worin die sich wiederholenden Carbonateinheiten der Formel (VII) mindestens 10 Mol% der Formel (VIII) umfassen,
worin die Mischung eine Phasen-getrennte Mischung ist mit mindestens zwei Glasübergangstemperaturen, wie gemessen durch ASTM Verfahren D5418, worin die erste Glasübergangstemperatur von 120 bis 160°C ist, und die zweite Glasübergangstemperatur ist von 170 bis 280°C.

2. Die Zusammensetzung gemäß Anspruch 1, worin die sich wiederholenden Carbonateinheiten der Formel (VII) mindestens 30 Mol% der Dihydroxyverbindung der Formel (VIII) umfassen.

3. Die Zusammensetzung gemäß Anspruch 1, worin die Dihydroxyverbindung der Formel (VIII) eine Dihydroxyverbindung der Formel (XV) umfasst 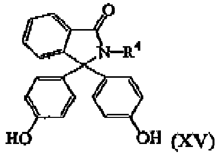 worin R⁴ eine C₁₋₆ Alkyl- oder Phenylgruppe ist.

4. Die Zusammensetzung gemäß Anspruch 1, worin die Dihydroxyverbindung der Formel (VIII) eine Dihydroxyverbindung der Formel (XVI) oder (XVII) umfasst

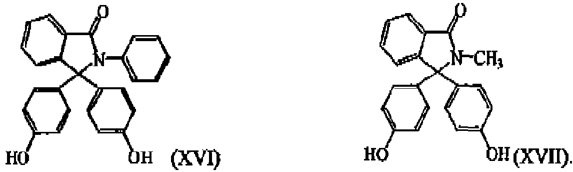

5. Die Zusammensetzung gemäß Anspruch 1, worin die Zusammensetzung eine Wärmeformbeständigkeit (HDT) von größer als oder gleich 160°C hat, gemessen wie durch ASTM Verfahren D648 bei 66 psi (0,46 MPa) an einer 3,2 mm Probe.

6. Die Zusammensetzung gemäß Anspruch 1, worin a) in einer Menge von 75 bis 30 Gewichtsprozent vorhanden ist, und b) in einer Menge von 25 bis 70 Gewichtsprozent vorhanden ist, basierend auf 100 Gewichtsprozent der Zusammensetzung.

7. Die Zusammensetzung gemäß Anspruch 1, worin das Copolycarbonat weniger als oder gleich 1000 ppm von benzylischen Protonen hat, oder das Copolycarbonat hat weniger als oder gleich 1 Mol% Urethangruppen.

8. Die Zusammensetzung gemäß Anspruch 1, worin die Zusammensetzung einen kristallinen Schmelzpunkt von 300 bis 380°C hat, wie gemessen durch ASTM Verfahren D3418.

9. Die Polymerzusammensetzung gemäß Anspruch 1, umfassend von 75 bis 30 Gewichtsprozent der ersten Harzkomponente und von 25 bis 70 Gewichtsprozent der zweiten Harzkomponente,
worin R¹ abgeleitet ist von einer Dihydroxyverbindung der Formel (XV): 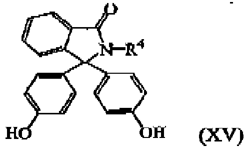 worin R⁴ ein C₁₋₆ Alkyl, eine C₆₋₂₀ Arylgruppe, Phenyl, oder Phenyl substituiert mit bis zu fünf Halogenen, Sulfon, Alkoxy, oder C₁₋₁₀ Alkylgruppen ist, und worin die sich wiederholenden Carbonateinheiten der Formel (VII) mindestens 10 Mol% der Formel (XV) umfassen.

10. Die Zusammensetzung gemäß Anspruch 9, worin R^{a} eine C₁₋₆ Alkyl- oder Phenylgruppe ist.

11. Die Zusammensetzung gemäß Anspruch 9, worin die Dihydroxyverbindung der Formel (XV) eine Dihydroxyverbindung der Formel (XVI) oder (XVII) umfasst

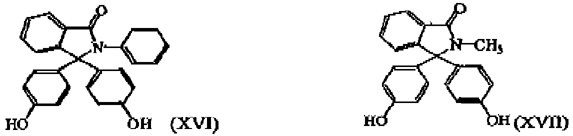

12. Die Zusammensetzung gemäß Anspruch 1 oder 9, worin das zweite Harz eine Glasübergangstemperatur (Tg) von 180 bis 280°C hat, wie gemessen durch ASTM Verfahren D3418.

13. Ein Artikel umfassend die Zusammensetzung gemäß Anspruch 1 oder 9.

14. Der Artikel gemäß Anspruch 13, worin der Artikel eine Folie, ein Film, eine Mehrschichtfolie, ein Mehrschichtfilm, ein Formteil, ein extrudiertes Profil, eine Faser, ein beschichtetes Teil oder ein Schaum ist.

15. Die Polymerzusammensetzung gemäß Anspruch 1, umfassend eine Mischung aus:
a) von 75 bis 30 Gewichtsprozent einer ersten Harzkomponente umfassend ein Polyaryletherketon, ein Polyarylketon, ein Polyetherketon, ein Polyetheretherketon, oder eine Kombination aus zwei oder mehreren der zuvor genannten, und
b) von 25 bis 70 Gewichtsprozent einer zweiten Harzkomponente umfassend ein Copolycarbonat mit sich wiederholenden Carbonateinheiten der Formel (VII) 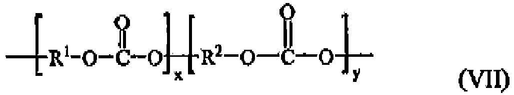
worin R¹ abgeleitet ist von einer Dihydroxyverbindung der Formel (XV) 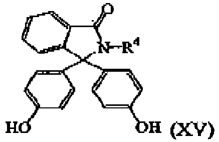 worin R⁴ C₁₋₆ Alkyl oder eine Phenylgruppe ist; und R² ist abgeleitet von einer Dihydroxyhydrocarbylenverbindung der Formel (IX)
HO-R⁶-OH (IX)
worin mindestens 60 Mol% der R⁶ Gruppen aromatisch sind, und die Dihydroxyverbindung der Formel (IX) ist nicht die gleiche wie die Dihydroxyverbindung der Formel (XV), worin x+y=100%, und worin die sich wiederholenden Carbonateinheiten der Formel (VII) mindestens 10 Mol% der Formel (XV) umfassen,
worin die Mischung mindestens zwei Glasübergangstemperaturen hat, wie gemessen durch ASTM Verfahren D5418, worin die erste Glasübergangstemperatur von 120 bis 160°C ist, und die zweite Glasübergangstemperatur ist von 170 bis 280°C,

## Revendications

1. Composition polymère comprenant un mélange de :
a) un premier composant de résine comprenant une polyaryléthercétone, une polyarylcétone, une polyéthercétone, une polyétheréthercétone ou une combinaison de deux de celles-ci ou plus, et
b) un second composant de résine comprenant un copolycarbonate ayant des motifs répétés de carbonate de formule (VIL) 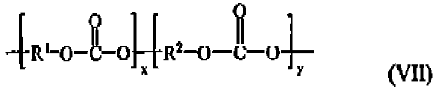
dans laquelle R¹ est dérivé d'un composé dihydroxy de formule (VIII) : 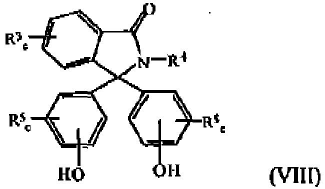 dans laquelle R³ et R⁵ sont indépendamment un atome d'halogène, un groupe alkyle en C₁ à C₁₀, un groupe alcoxy ou un groupe aryle en C₆ à C₂₀, R⁴ est un groupe alkyle en C₁ à C₆, un groupe aryle en C₆ à C₂₀, un groupe phényle ou un groupe phényle substitué par jusqu'à cinq atomes d'halogène, un groupe sulfone, un groupe alcoxy ou un groupe alkyle en C₁ à C₁₀, et c vaut de 0 à 4 ; et R² est dérivé d'un composé dihydroxyhydrocarbylène de formule (IX)
HO-R⁶-OH (IX)
dans laquelle au moins 60 % en moles des groupes R⁶ sont aromatiques et le composé dihydroxy de formule (IX) n'est pas le même que le composé dihydroxy de formule (VIII), et dans laquelle x+y = 100 %, et dans laquelle les motifs répétés de carbonate de formule (VII) comprennent au moins 10 % en moles de formule (VIII),
dans laquelle le mélange est un mélange de phases séparées ayant au moins deux températures de transition vitreuse, comme mesuré par la méthode ASTM D5418, la première température de transition vitreuse étant comprise dans la plage allant de 120 à 160 °C et la seconde température de transition vitreuse étant comprise dans la plage allant de 170 à 280 °C.

2. Composition selon la revendication 1, dans laquelle les motifs répétés de carbonate de formule (VII) comprennent au moins 30 % en moles du composé dihydroxy de formule (VIII).

3. Composition selon la revendication 1, dans laquelle le composé dihydroxy de formule (VIII) comprend un composé dihydroxy de formule (XV) 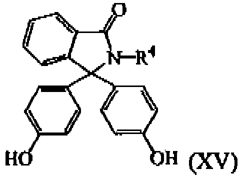 dans laquelle R⁴ est un groupe alkyle en C₁ à C₆ ou un groupe phényle.

4. Composition selon la revendication 1, dans laquelle le composé dihydroxy de formule (VIII) comprend un composé dihydroxy de formule (XVI) ou (XVII)

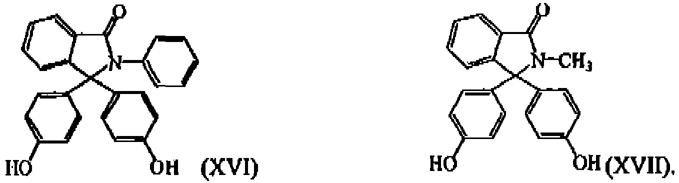

5. Composition selon la revendication 1, dans laquelle la composition a une température de déformation à la chaleur (HDT) supérieure ou égale à 160 °C, mesurée par la méthode ASTM D648 à 66 psi (0,46 MPa) sur un échantillon de 3,2 mm.

6. Composition selon la revendication 1, dans laquelle a) est présent en une quantité de 75 à 30 % en poids et b) est présent en une quantité de 25 à 70 % en poids, par rapport à 100 % en poids de la composition.

7. Composition selon la revendication 1, dans laquelle le copolycarbonate comprend 1000 ppm ou moins de protons benzyliques ou le copolycarbonate comprend 1 % en moles ou moins de groupes uréthane.

8. Composition selon la revendication 1, dans laquelle la composition a un point de fusion cristallin de 300 à 380 °C, comme mesuré par la méthode ASTM D3418.

9. Composition selon la revendication 1, comprenant de 75 à 30 % en poids du premier composant de résine et de 25 à 70 % en poids du second composant de résine,
dans laquelle R¹ est dérivé d'un composé dihydroxy de formule (XV) : 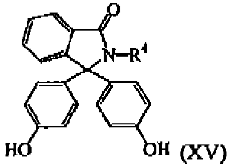 dans laquelle R⁴ est un groupe alkyle en C₁ à C₆, un groupe aryle en C₆ à C₂₀, un groupe phényle ou un groupe phényle substitué par jusqu'à cinq atomes d'halogène, un groupe sulfone, un groupe alcoxy ou un groupe alkyle en C₁ à C₁₀, et dans laquelle les motifs répétés de carbonate de formule (VII) comprennent au moins 10 % en moles de formule (XV).

10. Composition selon la revendication 9, dans laquelle R⁴ est un groupe alkyle en C₁ à C₆ ou un groupe phényle.

11. Composition selon la revendication 9, dans laquelle le composé dihydroxy de formule (XV) comprend un composé dihydroxy de formule (XVI) ou (XVII)

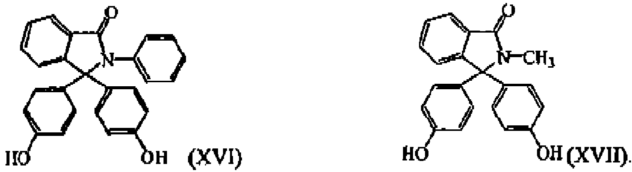

12. Composition selon la revendication 1 ou 9, dans laquelle la seconde résine a une température de transition vitreuse (Tg) de 180 à 280 °C, comme mesuré par la méthode ASTM D3418.

13. Article comprenant la composition selon la revendication 1 ou 9.

14. Article selon la revendication 13, dans lequel l'article est une feuille, un film, une feuille multicouche, un film multicouche, une partie moulée, un profil extrudé, une fibre, une partie enduite ou une mousse.

15. Composition polymère selon la revendication 1, comprenant un mélange de :
a) 75 à 30 % en poids d'un premier composant de résine comprenant une polyaryléthercétone, une polyarylcétone, une polyéthercétone, une polyétheréthercétone ou une combinaison de deux de celles-ci ou plus, et
b) 25 à 70 % en poids d'un second composant de résine comprenant un copolycarbonate ayant des motifs répétés de carbonate de formule (VII) 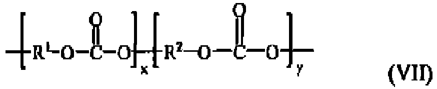
dans laquelle R¹ est dérivé d'un composé dihydroxy de formule (XV) : 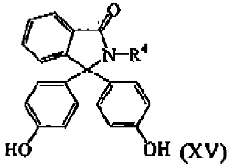 dans laquelle R⁴ est un groupe alkyle en C₁ à C₆ ou un groupe phényle ; et R² est dérivé d'un composé dihydroxyhydrocarbylène de formule (IX)
HO-R⁶-OH (IX)
dans laquelle au moins 60 % en moles des groupes R⁶ sont aromatiques et le composé dihydroxy de formule (IX) n'est pas le même que le composé dihydroxy de formule (XV), et dans laquelle x-y = 100 %, et dans laquelle les motifs répétés de carbonate de formule (VII) comprennent au moins 10 % en moles de formule (XV),
dans laquelle le mélange a au moins deux températures de transition vitreuse, comme mesuré par la méthode ASTM D5418, la première température de transition vitreuse étant comprise dans la plage allant de 120 à 160 °C et la seconde température de transition vitreuse étant comprise dans la plage allant de 170 à 280 °C.
